# EUROPEAN PATENT APPLICATION

(11) **EP 1 760 949 A1**
(43) Date of publication of application: **07.03.2007**
(21) Application number: 06254563.7
(22) Date of filing: 31.08.2006
(51) Int. Cl.: H04L 12/28

(54) **Pagers over a wireless network**

(30) Priority: 01.09.2005 US 219326
(71) Applicant: NTN Buzztime, Inc., Carlsbad, CA 92008 (US)
(72) Inventor: Veni, Salvatore, Dacula, GA 30019 (US); Rock, Wayne, Carrollton, TX 57006 (US)
(74) Representative: Bradford, Victoria Sophie

(57) **Abstract**

A paging system is operated over a conventional wireless network of the type that provides wireless information to users. The pagers are addressed over IP so that every pager that is within the range of a wireless node can receive the page. That way, the page can be delivered over a much longer area then conventional, specifically to anywhere within which there is a wireless pager device.

## Description

### Background

Pagers can be used over various RF networks. A typical premises pager uses 900 Mhz or 2.4 GHz, to provide an indication to a user, on the premises, of some message. Pagers of this type, for example, are commonly used in restaurants, to indicate that a table is ready for a restaurant patron.

These pager devices are power limited. The user must be within the range of the pager transmitter in order to receive the page indication. The range of the pager is increased the power output of the transmitter. The power output is limited by the FCC.

National pagers are also known. These use higher power techniques to contact the pager.

Pagers use a unique ID, called a cap code. Each pager listens for its cap code over the RF signal, and responds only to that cap code. The cap code may cause the pager to simply begin a specified display, e.g. of flashing lights as in the case of a restaurant pager, or alternatively may also provide a text message to the user.

### Summary

The present application describes a system enabling a pager to respond to IP addresses over an existing wireless network. According to one aspect, an existing wireless infrastructure is used and a pager is incorporated into that existing wireless infrastructure.

### Brief Description of the Drawings

These and other aspects will now be described in detail with reference to the accompanying drawings, wherein:

figure 1 shows a block diagram of how the pagers are used over the existing wireless network;

figure 2 illustrates an exemplary addressing scheme.

### Detailed Description

The general structure and techniques, and more specific embodiments which can be used to effect different ways of carrying out the more general goals are described herein.

An embodiment describes a pager that communicates over a wireless network infrastructure. Unlike other pagers which are cap code based devices, this pager uses an internet protocol, or IP address. Any form of IP address may be used. For example, the pager unit may respond to an IP address of the form xxx.yyy.zzz.aaa., as conventional. The IP-based mobile device which listens for information over the network, which may be a closed network.

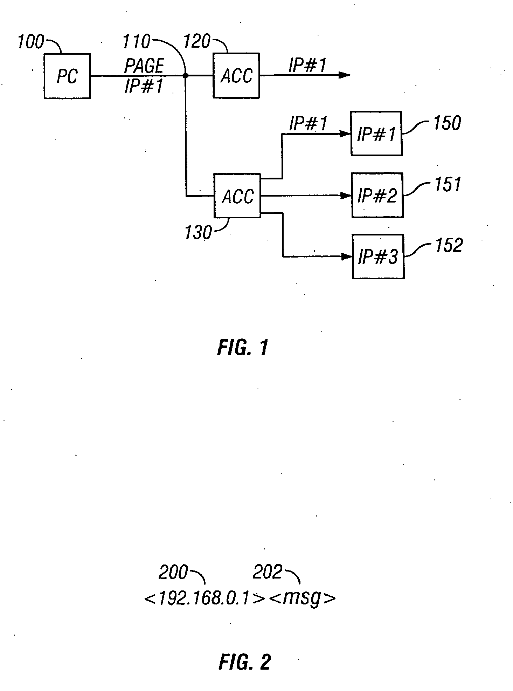

An embodiment is shown in figure 1. The network as shown is a closed network which may be used in a hospital, restaurant, hotel, shopping center, or other analogous location.

A controller is formed from PC 100, forming the basic control structure which produces a page for IP address number 1 (e.g., 192.168.0.1). This page is produced over the backbone network 110 and transmitted over that backbone network 110 to each of a plurality of wireless access points 120, 130 which are connected to the wireless network 110. Many premises already have infrastructure installed to support wireless capability, e.g., for guests, or workers. An embodiment allows the pager system to operate over the existing wireless network. Each access point produces a page signal with the selected IP address: IP #1. The message may be of the form shown in figure 2, where the first part of the message is the IP address 200, and the second part of the message is the message portion 202. The second part of the message may simply be a null field which indicates to the pager that it should display its default message receipt display. For example, the pager may buzz or flash to indicate that it has received a message. Alternatively, the message may be a text message of a specified length that may be displayed on the pager. Figure 1 shows three pagers with respective addresses. Any of the pagers can be within range of any of the access points. The embodiment shows only two access points here, 120 or 130. However, the number of access points is limited only by the applicable network standard.

Hence, the range of this network is not limited in the same way as a conventional pager system. The conventional pager system transmits the page over RF, and only those devices within range of the RF receive the page. In contrast, this system transmits the page over a backbone network, to a number of wireless network devices. Each of the wireless network devices transmit the page in the form of a wireless network state. The page can therefore be delivered to any location within the premises, e.g. on multiple floors, in multiple buildings, even throughout an entire campus, limited only by the extent of the network.

When the pager such as 150 detects its own IP address, it responds to the message. The response to the message may be by displaying a text portion within the message, or by indicating that it has received a message e.g. using flashing or the like. There can be any number of additional pagers, such as 151, 152. However, none of these will respond to the message with IP address number 1, since each of these papers will include a different own IP address.

The present system can be used within a restaurant, over the already existing wireless network infrastructure within the restaurant. It can also be used in other public places which include wireless infrastructure, such as airports, hotels, hospitals. The wireless infrastructure may be an 802.11 wireless Ethernet, e.g., 802,11 a, b, or g. The backbone part of the infrastructure may be wired Ethernet 802.11, or may be WiMax, or cellular, or some other form. However, it can also be used on other wireless systems, such as Zigbee, Bluetooth, and any other wireless network system.

Although only a few embodiments have been disclosed in detail above, other embodiments are possible and the inventor (s) intend these to be encompassed within this specification. The specification describes specific examples to accomplish a more general goal that may be accomplished in other way. This disclosure is intended to be exemplary, and the claims are intended to cover any modification or alternative which might be predictable to a person having ordinary skill in the art. For example, other networks can be used. Moreover, while the above describes a 12 digit IP address, other length IP addresses can be used.

Also, the inventor(s) intend that only those claims which use the words "means for" are intended to be interpreted under 35 USC 112, sixth paragraph. Moreover, no limitations from the specification are intended to be read into any claims, unless those limitations are expressly included in the claims.

## Claims

1. A system, comprising:
a controller part, which produces a paging message, intended for one specific pager device, and includes an Internet protocol address indicative of said one specific pager device, and a message associated with said Internet protocol address, said computer part including a backbone network connection which sends said paging message over said backbone network connection;
a plurality of wireless access points, which operate using wireless network protocol, which receive said Internet protocol address over said backbone network connection and said message, and transmit said Internet protocol address and message using said wireless network protocol; and
a plurality of pager devices, each said pager device responsive to only a single one of said Internet protocol addresses, receiving using said wireless network protocol, and, responsive to said receiving, displaying said message.

2. A system as in claim 1, wherein said backbone network connection is a wired network connection, said wireless access points are each responsive to a protocol of the wired network connection, and produce wireless network information responsive thereto.

3. A system as in claim 1 or claim 2, wherein said wired network connection is wired Ethernet, and said wireless network connection is 802.11 wireless Ethernet.

4. A system as in any of claims 1 to 3, wherein said backbone connection is a wireless long-range network connection, said wireless access points are each responsive to a protocol of the connection, and produce wireless network information.

5. A system as in any of claims 1 to 4 wherein said wireless access points also provide Internet to users at the premises.

6. A system, comprising:
a controller which produces a paging message intended for one specific paging device, said paging message including an Internet protocol address in ticket above said one specific device, and including information indicative of what the one specific device should do in response to receiving said paging message;
a plurality of wireless network devices, which deliver Internet content to users, said network connections also providing said paging message to each device within a range of each of said plurality of network devices; and
a backbone network connection connected between said controller and said each of said wireless network devices.

7. A system as in claim 6, wherein said backbone network connection includes a wired ethernet connection.

8. A method, comprising:
delivering Internet content to a plurality of users over a plurality of wireless access points;
generating a page intended for a paging device that is associated with an Internet protocol address;
sending said page over a network backbone to said plurality of wireless access points that are delivering said Internet content; and
receiving said page in each of a plurality of paging devices, and responding to said page in only the one paging device responsive to the Internet protocol address.

9. A method as in claim 8, wherein the Internet protocol address is a 12 digit address.

10. A method as in claim or claim 9, wherein the wireless access points deliver information by 802.11 wireless protocol.

11. A method as in any of claims 8 to 10, wherein the wireless access points deliver information by a mesh form of wireless protocol.
